# EUROPEAN PATENT APPLICATION

(11) **EP 2 521 315 A1**
(43) Date of publication of application: **07.11.2012**
(21) Application number: 12166691.1
(22) Date of filing: 03.05.2012
(51) Int. Cl.: H04L 12/24, H04L 12/56

(54) **Systems and methods for modeling a multi-layer network topology**

(30) Priority: 03.05.2011 US 201113099572
(71) Applicant: Monolith Technology Services, Inc., St Charles, IL 60175 (US)
(72) Inventor: Ennis, Shawn Patrick, ST CHARLES, IL Illinois 60175 (US)
(74) Representative: Pelly, Jason Charles

(57) **Abstract**

The present invention is directed towards systems and method for creating a network topology model. The method comprises identifying a network element on a network. The method then creates a network object model and a network link model for the network element, wherein the network object model and network link model comprise a multi-layer representation of the network element. The method further stores the network object model and network link model in one or more databases.

## Description

### COPYRIGHT NOTICE

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### FIELD OF THE INVENTION

Embodiments of the invention described herein generally relate to modeling network topologies and dependencies. More specifically, embodiments of the present invention are directed towards systems and methods for modeling each layer of a multi-layer network model.

### BACKGROUND OF THE INVENTION

Monitoring of network services, devices and interconnections is critical to the maintenance and upkeep of any modern network. As networks, both internal and external, continue to grow, the possibility of fault within any given network service, device or interconnection grows exponentially. Furthermore, with the increase in complexity across all hardware and software aspects of a given network, identifying faults at any given point or layer in the infrastructure stack becomes increasingly difficult in view of existing solutions.

Current modeling solutions generally fail to consider all layers of the infrastructure stack that an organization might deploy; most solutions only monitor a subset of layers comprising the OSI model. For example, using the OSI model as a representation of the infrastructure stack (inclusive of hardware and software) that a given organization might deploy, many solutions only model layers one ("physical"), two ("data link"), and three ("network") of the OSI model. While these solutions adequately monitor these lower layers, they fail to provide a cohesive picture of the entire state of a network, including activities at higher layers of the OSI model, such as the behavior and interaction of software and other services that operate over the physical network infrastructure and according to relevant communication protocols. Accordingly, these solutions fail to capture important details residing in these upper layers.

The need to model multiple layers of hardware and software infrastructure increases as providers continue to expand services. For example, cable operators continue to increase the number of services offered to customers and in recent years have expanded analog cable services to add digital cable, video on-demand, VolP, and Internet-based applications such as streaming video or other applications. As operators add services to a given network, modeling the network becomes increasingly difficult. For example, since existing solutions are not able to holistically model all layers of the infrastructure stack that an organization might deploy, the operator may not be able to determine the source of faults when confronted with an error on a given layer. That is, the operator may identify that a fault occurred, but since prior solutions only model portions of the infrastructure stack that an organization might deploy, the operator may be unable to identify, for example, applications, such as video-on-demand, that may be the true root cause of a given fault.

Thus, a network administrator or service provider is currently forced to use multiple systems to monitor and manage any administered network at each layer of the infrastructure stack that an organization might deploy. One disadvantage of this approach is that by using multiple monitoring solutions, the administrator is unable to obtain a complete picture of the network. This is primarily a result of the inability of existing solutions to adequately communicate with one another or simply being unable to access requisite information. Thus, there is a need in the current state of the art for a solution that models all layers of the infrastructure stack that an organization might deploy for a given network.

### SUMMARY OF THE INVENTION

The present invention is directed towards systems and methods for creating a network topology model. In one embodiment, a computer-implemented method identifies a network element on a network, which may comprise identifying a network element by crawling the network and discovering one or more given network elements. In an alternative embodiment, identifying a network element comprises querying an external data source for a list of network elements. Combinations of these embodiments are also contemplated by embodiments of the invention. External data sources include, but are not limited to, one of a licensing server, service monitor, or provisioning server.

The method may create, via a processing device, a network object model and a network link model for a given network element, wherein the network object model and network link model comprise a multi-layer representation of the network element. In one embodiment, the network object model contains the type of the network element and a plurality of properties associated with the network element. In another embodiment, the network link model contains the type of the network element and a plurality of properties associated with the network element. In an alternative embodiment, the network link model contains at least two endpoints associated with a network link, wherein the two endpoints comprise network object store in a database. In accordance with other embodiments, a multi-layer representation of a given network element comprises a representation of all seven layers of the OSI model.

The present invention is further directed towards computer readable media comprising program code for execution by a programmable processor that instructs the processor to perform a method for creating a network topology model. According to one embodiment, the computer readable media contains program code for identifying a network element on a network, which may comprise program code for identifying a network element for crawling the network and discovering a given network element. In an alternative embodiment, program code for identifying a network element comprises querying an external data source for a list of network elements. External data sources include, but are not limited to, one of a licensing server, service monitor, or provisioning server.

The computer readable media may comprise program code for creating a network object model and a network link model for a given network element, wherein the network object model and network link model comprise a multi-layer representation of the given network element. In one embodiment, the network object model identifies a type of network element and one or more properties associated with the network element. In another embodiment, the network link model contains the type of the network element and one or more properties associated with the network element. In still other embodiments, the network link model contains at least two endpoints associated with a network link, wherein the two endpoints comprise network object store in a database. A multi-layer representation of a given network element may comprise a representation of all seven layers of the OSI model.

The present invention is further directed towards a system for creating a network topology model that comprises a network modeler system for identifying a network element on a network, and a network object database and a network link database for storing a network object model and a network link model for the network element, wherein the network object model and network link model comprise a multi-layer representation of the network element. In one embodiment, the network modeler system is further operative to query an external data source for a list of network elements or additional information regarding one or more network elements, wherein an external data source comprises one of a licensing server, service monitor, or provisioning server. The network object model may identify a type of the network element and a plurality of properties associated with the network element. According to certain embodiments, the network link model may contain the type of the network element and a plurality of properties associated with the network element. The network link model may also contain at least two endpoints associated with a network link, wherein the two endpoints comprise network object store in a database. In other embodiments, a multi-layer representation comprises a representation of all seven layers of the OSI model.

### BRIEF DESCRIPTION OF THE DRAWINGS

The invention is illustrated in the figures of the accompanying drawings which are meant to be exemplary and not limiting, in which like references are intended to refer to like or corresponding parts, and in which:

Fig. 1 presents a block diagram illustrating an exemplary network according to one embodiment of the present invention;

Fig. 2 presents a block diagram illustrating a network modeling system according to one embodiment of the present invention;

Figs. 3 a and 3b present a flow diagram illustrating a method for discovering and modeling network elements according to one embodiment of the present invention; and

Fig. 4 presents a flow diagram illustrating a method for normalizing network elements according to one embodiment of the present invention.

### DETAILED DESCRIPTION OF THE EMBODIMENTS

In the following description, reference is made to the accompanying drawings that form a part hereof, and in which is shown by way of illustration specific embodiments in which the invention may be practiced. It is to be understood that other embodiments may be utilized and structural changes may be made without departing from the scope of the present invention.

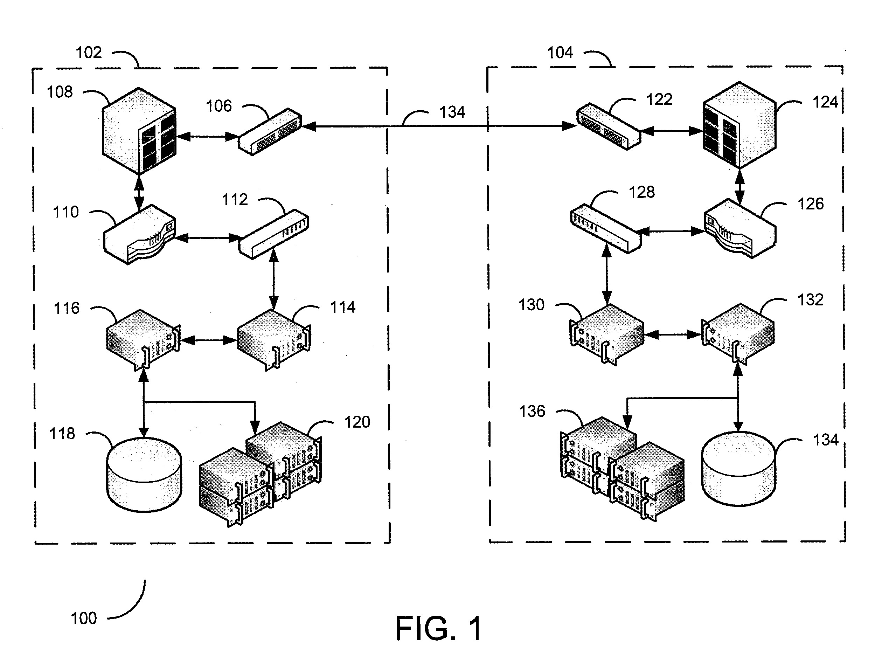

Fig. 1 presents a block diagram illustrating an exemplary network that may be represented in accordance with the OSI seven-layer model according to one embodiment of the present invention. In the embodiment of Figure 1, a network 100 contains a plurality of subnets 102, 104, a given subnet comprising a plurality of network elements 106-120 and 122-136, respectively, which may be interconnected via a network link 134, such as a fiber or similar high bandwidth connection.

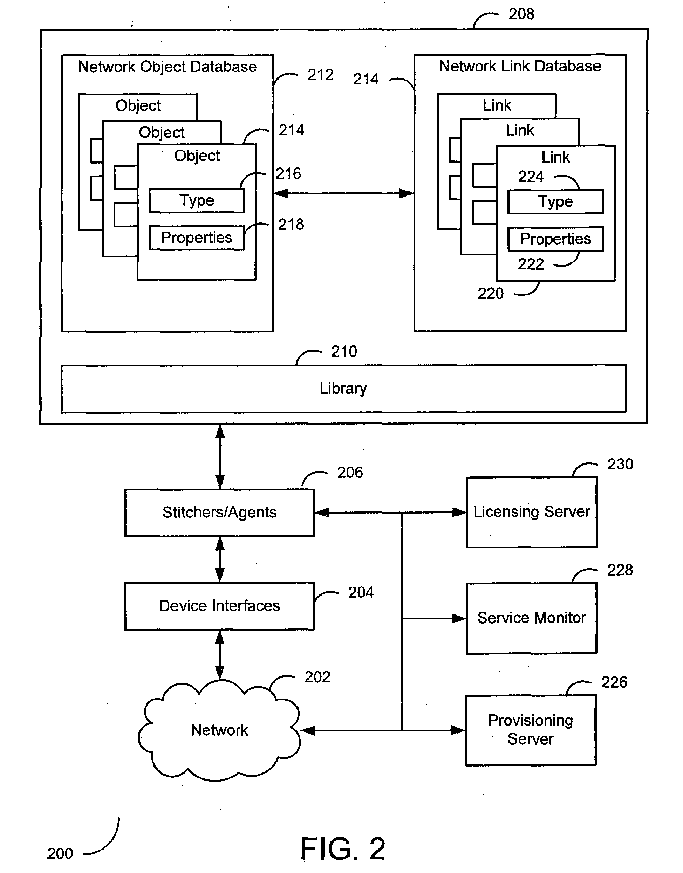

In the illustrated embodiment, a given subnet 102, 104 may comprise a plurality of network elements (some of which may be executing or otherwise providing application services) operating at various layers of the OSI model. For example, primary web 120, 136 and primary database 118, 134 applications may be operating at the application layer. These services are connected to a layer-6 virtual host 116, 132 that is, in turn, connected to layer-5 ESX servers 114, 130. A given layer-5 ESX server 114, 130 may contain a plurality of hardware interfaces, which in the illustrated embodiment are connected to layer-4 switches 112, 128 that are, in turn, connected to layer-3 routers 110, 126. The layer-3 routers 110, 126 may be connected to layer-2 SONET-enabled devices 108, 124, such as an add-drop multiplexer (ADM) or similar device. These devices 108, 124 may then be connected to a layer-1 multiplexer, 106, 122, such as a dense wave division multiplexer ("DWDM"). Notably, the network and subnets that Figure 2 illustrates are exemplary in nature and various permutations of network elements should considered by one of skill in the art as falling within the present disclosure.

Fig. 2 presents a block diagram illustrating a network modeling system according to one embodiment of the present invention. As the embodiment of Figure 2 illustrates, a network modeling system 208 connects to or is otherwise in communication with a network 202 via stitchers or agents 206 connected to one or more device interfaces 204. In the embodiment of Figure 2, network 202 comprises a plurality of network elements, as previously discussed with respect to Figure 1, which may include devices and services executing on or provided by such devices. The network modeling system 208 may comprise a dedicated server operative to host or serve one or more hardware and/or software modules implementing systems and methods in accordance with various embodiments of the invention. In alternative embodiments, the network modeling system 208 may comprise a plurality of server devices, a given server operative to host or serve one or more hardware and/or software modules. For example, network object database 212, network link database 214, and library 210 may execute on separate hardware devices.

The library 210 of network modeling system 208 allows the network modeling system 208 to inspect and model network elements present within the network 202. In one embodiment, the library 210 may include an API allowing for the addition, modification, and deletion of objects 214 or links 220 in the network object database 212 or network link database 214, respectively. Additionally, library 210 may provide one or more interfaces between the stitchers and agents 206 on the one hand and databases 212, 214 on the other.

In the illustrated embodiment, the network modeling system 208 may perform an active inspection of the network 202. In alternative embodiments, the network modeling system 208 may passively monitor traffic within the network 202. The network modeling system 208 may send instructions to the stitchers and agents 206 to begin a network discovery process. In the illustrated embodiment, stitchers and agents 206 may be pre-configured to interact with the device interfaces 204 to obtain information regarding network elements, including hardware and software resources, within the network 202. For example, a given stitcher may be operative to send instructions to a gateway router within the network 202 to retrieve a list of devices currently connected to the router. In this example, the stitcher may then report the presence of network elements to the network modeling system 208. In response, the network modeling system 208 may instruct the stitchers or agents 206 to repeat the discovery process for the identified, connected network elements.

In addition to crawling a network 202, the network modeling system 208 may further instruct the stitchers and agents 206 to query various external data sources 226, 228, 230 to identify characteristics of higher layers of the OSI model, which may also include output from one or more stitchers and agents 206. For example, if a given stitcher identifies a server device, the stitchers or agents 206 may query a licensing server 230, service monitor 228, or provisioning server 226 to determine if the server exhibits any characteristics of a higher-layer protocol. For example, if a server acts as an FTP server, licensing server 230, service monitor 228, or provisioning server 226 may contain information associating the server with the layer-7 FTP protocol. In this manner, the stitchers or agents 206 may identify a plurality of OSI characteristics in one look-up, rather than querying the device for all potential protocols, those of skill in the art recognize the performance benefits this achieves.

Stitchers and agents 206 transmit data regarding the network elements within the network 202 to the network modeling system 208 via library 210. In the illustrated embodiment, the stitchers and agents 206 return data including, but not limited to, the address of the network elements, the number and identification of devices connected to the network element, a list of protocols or services used or accepted by the network element, the type of the device, etc.

The network modeling system 208 analyzes the incoming data to store the data in the network object database 212 and network link database 214. In the illustrated embodiment, a network element is represented as both an object 214 and a link 224, and the network object database 212 represents a network element as an object 214 comprising a type 216 and one or more properties 218. An object type 216 corresponds to the type of network element received from the stitchers or agents 206. For example, the object type 216 may indicate that a network element is a multiplexer, router, switch, server, etc. The properties 218 of an object correspond to the one or more protocols and services that the network element supports, which may be identified by the stitchers. Additionally, the network modeling system 208 may store various data describing the network element including, but not limited to, the elements network address, hardware properties, specifications, etc.

In addition to the foregoing, the network modeling system 208 may model a given network element as a link 220 (which may be in addition to modeling the network element as an object 214). In one embodiment, the network modeling system 208 models a network element, itself, as a link between two other endpoints or devices. In this embodiment, the network modeling system 208 may store the type of the network element 224, e.g., multiplexer, router, switch, or server. The network modeling system 208 may additionally store properties 222 of the network element relevant to categorizing the network element as a link. For example, the network modeling system 208 may store the supported services and protocols and the connections between network elements formed by those services and protocols.

In an alternative embodiment, the network modeling system 208 may model one or more links on the basis of physical connections between network elements. For example, a link 224 may comprise an indication of two network elements, or objects 214, that comprise the endpoints of a link 224. Additionally, the network modeling system 208 may store properties 222 of the physical link (e.g., fiber cable, etc.) as well as protocols and services utilizing the link.

In addition to the creation of objects and links, the library 210 may provide an API of functions that allow the system 200 to retrieve, update, or delete objects and links in one or more of the network object database 212 and the network link database 214. In accordance with one embodiment, the network modeling system 208 may periodically inspect the network to detect changes in the network topology. If a change is detected, the network modeling system 208 may update objects 214 or links 220 accordingly. For example, if a server is removed from the network, the network modeling system 208 may delete the corresponding object(s) 214 from the network object database 212 and remove any links 224 associated with the removed object(s) 214.

The library 210 may further provide a retrieval interface to allow an operator, or automated system, to retrieve information from one or more of the network object database 212 and the network link database 214. In one embodiment, the system 200 may provide a graphical user interface ("GUI") (not illustrated) that allows a user to view the network at any layer of the seven layer OSI model as represented by data in the network object database 212 and the network link database 214. Because the topology comprises all layers of the OSI model, the system 200 allows the user to view a complete picture of the inspected network.

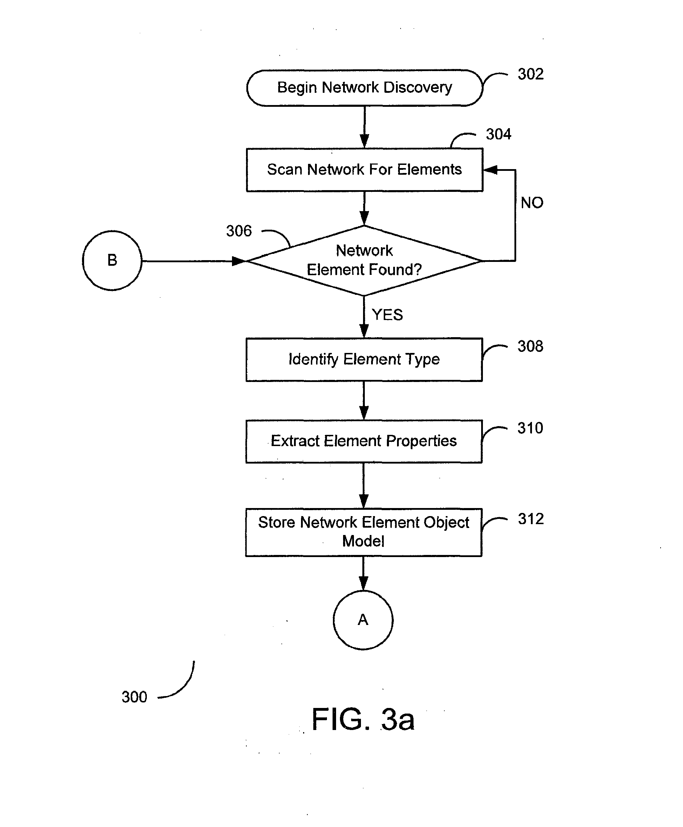

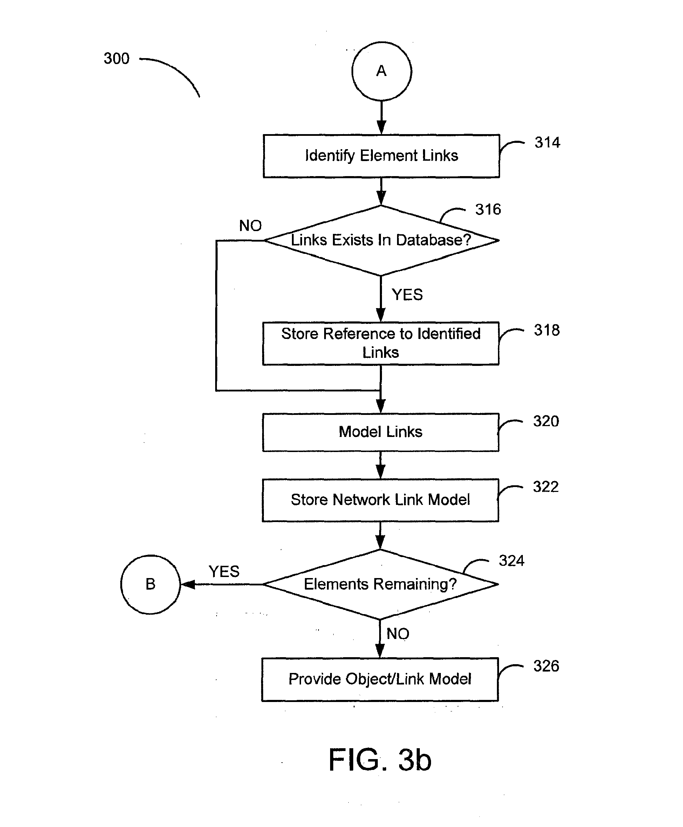

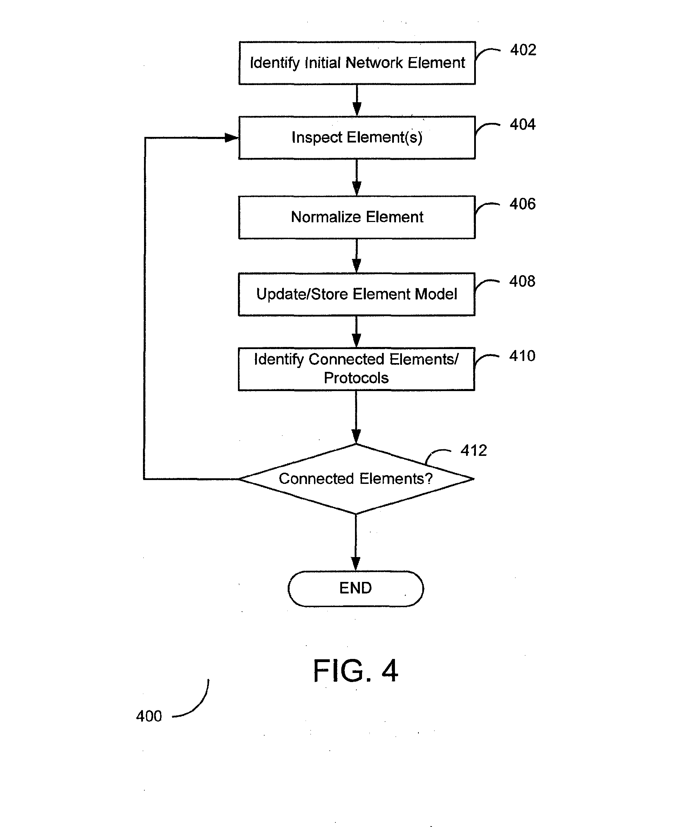

Figs. 3a and 3b present flow diagrams illustrating a method for discovering and modeling network elements according to one embodiment of the present invention. According to the embodiment of Figure 4a, a method 300 begins with initiation of network discovery, step 302, which may begin in response to a request from a user. Alternatively, or in conjunction with the foregoing, the method 300 may automatically initiate network discovery, or may periodically discover elements comprising the network.

The method 300 scans the network for elements, step 304. In one embodiment, the method 300 may query a first device to identify a plurality of connected devices and continue to query the connected devices in a similar fashion, e.g., via Spanning Tree Protocol. For example, the method 300 may query a gateway router that maintains one or more connected devices. The method 300 may then query the connected devices (e.g., one or more or multiplexers) that identify additional devices and services on the network. In an alternative embodiment, or in conjunction with the foregoing, the method 300 may query external data sources such as provisioning servers, licensing servers, etc., to identify additional network elements in the network.

If the method 300 does not identify any network elements, step 306, the method 300 continues to scan for network elements, step 304, which may comprise scanning for new or modified network elements. In one embodiment, the method 300 may continue scanning the network for elements, step 304, until a predetermined stop condition is met. If the method 300 identifies a network element, step 306, the method identifies the element type, step 308. In the illustrated embodiment, the method 300 may exchanges messages with the identified network elements using pre-defined protocols. In response, the network elements may respond and identify themselves, as well as reply to commands or provide additional information.

The method 300 may extract network element properties, step 310. In the illustrated embodiment, extracting network element properties may be accomplished in a similar manner as described above. That is, the method 300 may exchange messages with the identified network elements using pre-defined protocols and receive responses providing various parameters associated with the network element including, but not limited to, the element network address, hardware capabilities, etc. Additionally, the network element may respond with a list of services and/or protocols employed by the device. Alternatively, or in conjunction with the foregoing, the method 300 may query external data sources to obtain properties of the network element.

After identifying the type and properties of a network element, the method 300 may store the network element object model, step 312. In the illustrated embodiment, storing a network element object model comprises storing the identified data in a relational database or similar structure.

Turning to Fig. 4b, in addition to generating an object model for an identified network element, the method 300 may additionally identify element links associated with a given identified network element, step 314. Links may comprise a physical connection between two network elements. In alternative embodiments, links may comprise logical connections between network elements; that is, links between two network elements having network elements in between.

The method 300 determines if the network element link exists in the network link database, step 316. Links may already exist in the database due to previously identifying the other endpoint of the link. For example, if the method 300 has previously inspected a router, a link between the router and a client workstation may have been stored. Subsequently, when the method 300 identifies the workstation, the method would not store a duplicate link from the workstation to the router. If the method 300 determines that links have been identified that are not already in the database, the method 300 stores reference to the identified links, step 318. In one embodiment, the method 300 stores a reference to the identified links by storing the endpoints of the link in a database, such as a relational database.

The method 300 continues by modeling the links, step 320. Modeling links may be accomplished by determining various properties of a given link including, but not limited to, the type of link, used services or protocols, etc. In addition to properties of the link, the method 300 may additionally store references to network elements using the link. In one embodiment, a reference to a network element may comprise a reference to an object previously modeled and stored in the network object database.

The method 300 may store the network link model, step 322, and determines if any elements are remaining for inspection, step 324. If elements are still identified, but still awaiting inspection, the method 300 continues to inspect the remaining elements, steps 308-322. If the method 300 completes inspecting all identified network elements, the method 300 provides the object/link model, step 326. The method 300 may provide the link model by presenting a graphical representation of the identified network objects and links. In alternative embodiments, the method 300 may provide the object/link model by allowing a user to access the data stored in the network databases via an API or similar mechanism. Although described as discovering new network elements, the above-described method may be utilized to update stored network element data periodically, on demand or combinations thereof.

Fig. 4 presents a flow diagram illustrating a method for normalizing network elements according to one embodiment of the present invention. According to the embodiment that Figure 4 illustrates, the method 400 identifies an initial network element, step 402. According to one embodiment, the method 400 begins with a gateway router, or similar device, that connects with multiple devices. The method 400 first inspects the element, step 404. As discussed above, inspecting a network element may comprise identifying a plurality of parameters associated with the network element such as the network element name, properties, or link characteristics.

After inspecting the element, the method 400 normalizes the data associated with the network element, step 406. In one embodiment, normalizing the data associated with the network element comprises analyzing the data for anomalous results and removing, or correcting, the errant data. In alternative embodiments, normalizing the network element data may comprise utilizing various error detection and correction routines. In accordance with another alternative embodiment, the method 400 may utilize traffic data to model the network element. In some embodiments, the method 400 may normalize the traffic data over time to reduce the effects of traffic spikes associated with the network element.

After the method 400 normalizes the network element, the method 400 updates or stores the element model, step 408. Updating and storing a network model has previously been discussed and will not be repeated for the sake of clarity. The method 400 identifies connected elements or protocols, step 410. In one embodiment, the method 400 may transmit a querying request to the network element to identify any other network elements connected to the currently inspected network element. In this embodiment, the currently inspected network element may return a list of connected network elements. If there are any connected elements, step 412, the method continues to inspect the remaining network elements, steps 404-410. If not, the method 400 ends.

Figures 1 through 4 are conceptual illustrations allowing for an explanation of the present invention. It should be understood that various aspects of the embodiments of the present invention could be implemented in hardware, firmware, software, or combinations thereof. In such embodiments, the various components and/or steps would be implemented in hardware, firmware, and/or software to perform the functions of the present invention. That is, the same piece of hardware, firmware, or module of software could perform one or more of the illustrated blocks (e.g., components or steps).

In software implementations, computer software (e.g., programs or other instructions) and/or data is stored on a machine readable medium as part of a computer program product, and is loaded into a computer system or other device or machine via a removable storage drive, hard drive, or communications interface. Computer programs (also called computer control logic or computer readable program code) are stored in a main and/or secondary memory, and executed by one or more processors (controllers, or the like) to cause the one or more processors to perform the functions of the invention as described herein. In this document, the terms "machine readable medium," "computer program medium" and "computer usable medium" are used to generally refer to media such as a random access memory (RAM); a read only memory (ROM); a removable storage unit (e.g., a magnetic or optical disc, flash memory device, or the like); a hard disk; or the like.

Notably, the figures and examples above are not meant to limit the scope of the present invention to a single embodiment, as other embodiments are possible by way of interchange of some or all of the described or illustrated elements. Moreover, where certain elements of the present invention can be partially or fully implemented using known components, only those portions of such known components that are necessary for an understanding of the present invention are described, and detailed descriptions of other portions of such known components are omitted so as not to obscure the invention. In the present specification, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

The foregoing description of the specific embodiments so fully reveals the general nature of the invention that others can, by applying knowledge within the skill of the relevant art(s) (including the contents of the documents cited and incorporated by reference herein), readily modify and/or adapt for various applications such specific embodiments, without undue experimentation, without departing from the general concept of the present invention. Such adaptations and modifications are therefore intended to be within the meaning and range of equivalents of the disclosed embodiments, based on the teaching and guidance presented herein.

While various embodiments of the present invention have been described above, it should be understood that they have been presented by way of example, and not limitation. It would be apparent to one skilled in the relevant art(s) that various changes in form and detail could be made therein without departing from the spirit and scope of the invention. Thus, the present invention should not be limited by any of the above-described exemplary embodiments, but should be defined only in accordance with the following claims and their equivalents.

## Claims

1. A computer-implemented method for creating a network topology model, the method comprising:
identifying a network element on a network;
creating, via a processing device, a network object model and a network link model for the network element, wherein the network object model and network link model comprise a multi-layer representation of the network element; and
storing the network object model and network link model in a database.

2. The method of claim 1 wherein identifying a network element comprises crawling the network and discovering a network element.

3. The method of claim 1 wherein identifying a network element comprises querying an external data source for a list of network elements.

4. The method of claim 3 wherein the external data source comprises one of a licensing server, service monitor, or provisioning server.

5. The method of claim 1, 2, or 3 wherein the network object model identifies a type of the network element and a plurality of properties associated with the network element.

6. The method of claim 1, 2, or 3 wherein the network link model contains the type of the network element and a plurality of properties associated with the network element.

7. The method of claim 1, 2, or 3 wherein the network link model contains at least two endpoints associated with a network link and wherein the two endpoints comprise network object store in a database.

8. The method of claim 1 wherein a multi-layer representation comprises a representation of all seven layers of an OSI model.

9. A system for creating a network topology model, the system comprising:
a network modeler system for identifying a network element on a network; and
a network object database and a network link database for storing a network object model and a network link model for the network element, wherein the network object model and network link model comprise a multi-layer representation of the network element.

10. The system of claim 9 wherein the network modeler system is further operative to query an external data source for a list of network elements.

11. The system of claim 10 wherein the external data source comprises one of a licensing server, service monitor, or provisioning server.

12. The system of claim 9 or 10 wherein the network object model identifies a type of the network element and a plurality of properties associated with the network element.

13. The system of claim 9 or 10 wherein the network link model contains the type of the network element and a plurality of properties associated with the network element.

14. The system of claim 9 or 10 wherein the network link model contains at least two endpoints associated with a network link, wherein the two endpoints comprise network object store in a database.

15. The system of claim 9 wherein a multi-layer representation comprises a representation of all seven layers of an OSI model.
